# EUROPÄISCHE PATENTANMELDUNG

(11) **EP 0 620 130 A1**
(43) Veröffentlichungstag der Anmeldung: **19.10.1994**
(21) Anmeldenummer: 94105566.7
(22) Anmeldetag: 11.04.1994
(51) Int. Cl.: B60C 15/04, B29D 30/48, B60C 15/06

(54) **Fahrzeugluftreifen**

(30) Priorität: 27.04.1993 DE 4313698; 13.04.1993 DE 4312079
(71) Anmelder: PNEUMANT REIFEN & GUMMI WERKE GmbH, D-15517 Fürstenwalde (DE)
(72) Erfinder: Ludwig, Dieter, CH-4460 Gelterkinden (CH)
(74) Vertreter: Thiermann, Jürgen

(57) **Zusammenfassung**

Die Erfindung betrifft einen Fahrzeugluftreifen, bestehend aus einer Karkasse, die mit Beschichtungen aus verschiedenen Gummimischungen versehen ist, wobei die Karkasse im Bereich der Lauffläche eine Profilanordnung aufweist, unter der umlaufende Stahl- und/oder Textilanordnungen, bzw. Kunststoffplatten in Sandwichbauweise zur Verstärkung der Lauffläche angeordnet sind, sowie einem beidseitig an die jeweilige Seitenwand anschließenden und in eine Felgenwulst einlegbaren Wulstfuß, der aus wenigstens einem Wulstkern aus einem zugfesten Material mit jeweils zugehörigem, auf jedem Wulstkern aufsitzenden, Kernreiter besteht, wobei diese durch die Karkasse umschlossen werden.

Durch die Erfindung soll ein einfach herzustellender Fahrzeugluftreifen mit guten Fahreigenschaften geschaffen werden, der bei Erfüllung der Festigkeitsforderungen im Wulstbereich leicht auf üblichen Felgen montiert werden kann und der insbesondere gut entsorgt werden kann.

Die Erfindung ist dadurch gekennzeichnet, daß der Wulstkern (1) aus einer Monowicklung eines endlos gewickelten Textilfadens (2) hoher Festigkeit gebildet ist, und daß der Wulstkern (1) wenigstens teilweise durch eine zusätzliche Umhüllung (3) aus einem biegesteifen Material umgeben ist.

## Beschreibung

Die Erfindung betrifft einen Fahrzeugluftreifen, bestehend aus einer Karkasse, die mit Beschichtungen aus verschiedenen Gummimischungen versehen ist, wobei die Karkasse im Bereich der Lauffläche eine Profilanordnung aufweist, unter der umlaufende Stahl- und/oder Textilanordnungen, bzw. Kunststoffplatten in Sandwichbauweise zur Verstärkung der Lauffläche angeordnet sind, sowie einem beidseitig an die jeweilige Seitenwand anschließenden und in eine Felgenwulst einlegbaren Wulstfuß, der aus wenigstens einem Wulstkern aus einem zugfesten Material mit jeweils zugehörigem, auf jedem Wulstkern aufsitzenden, Kernreiter besteht, wobei diese durch den Karkassencord umschlossen werden.

Fahrzeugluftreifen bestehen üblicherweise aus einer Karkasse mit einer profilierten Lauffläche, einer unterhalb der Lauffläche befindlichen Verstärkungslage aus Textil- oder Stahlcord und einem Wulstbereich mit einer Einlage aus einem Metalldraht oder einem Drahtringpaket, um einen guten Sitz des Reifens auf der Felge zu erreichen. Dieser Wulsteinlagedrahtring besteht üblicherweise aus vier oder mehr Stahldrähten größerer Länge, die nebeneinanderliegend mit einer Elastomermischung in einem Querkopf extrudiert werden. Anschließend wird das auf diese Weise hergestellte Metall-Elastomerband in vier, fünf oder mehr Windungen auf einen vorher genau definierten Durchmesser aufgewickelt. Dieses Drahtringpaket hält infolge der Eigenklebrigkeit der Elastomermischung fest zusammen. Anstelle der Stahldrähte werden auch elastomerfreie Kabel verwendet, die aus dünnen gebündelten Einzeldrähten bestehen und den Vorzug eines geringeren Gewichtes und einer höheren Elastizität aufweisen.

Die Entsorgung derartiger Reifen bereitet aber wegen des erheblichen Anfalls abgefahrener Reifen zunehmend Schwierigkeiten, sofern diese nicht für eine Neugummierung verwendet werden können. Die besonderen Probleme der Entsorgung der Altreifen resultieren einerseits aus der Vielzahl der verwendeten Gummisorten und andererseits aus dem relativ hohen Metallanteil derselben. Soll beispielsweise aus den Altreifen Gummistaub oder ein Gummigranulat zur Verwendung im Straßenbau oder in Sportanlagen, oder auch für Gummimatten oder sonstige Billigartikel gewonnen werden, so ist es unumgänglich, die Metallanteile aus den Reifen zu entfernen. Gerade aber diese Notwendigkeit führt zu erheblichen Mehraufwendungen für die Abtrennung der Metallanteile. Hierzu wird der Wulstbereich üblicherweise mit dem darin befindlichen Drahtring vor dem Schreddern der Gummiteile herausgeschnitten, was im warmen Zustand oder nach Unterkühlung desselben mittels flüssigem Stickstoff erfolgen kann. Die unterhalb der Lauffläche angeordnete Verstärkungseinlage aus Metallcord kann jedoch auf diese Weise nicht entfernt werden, so daß das beim Schreddern entstehende Gummigranulat in erheblichem Maße von Metallteilen durchsetzt ist. Diese Metallteile können anschließend mit Magneten entfernt werden, wobei ein erheblicher Zeitaufwand hierfür aufgebracht werden muß, um ein gründliches Aussortieren auch kleiner Metallteile zu erreichen.

Räder aus den Anfängen der Automobiltechnik waren noch mit metallfreien Reifen versehen, d.h. sogenannten Wulst- oder Clincherreifen, die aber eine besonders ausgestaltete Felge erforderten. Außerdem erwies sich die Montage derartiger Reifen auf den speziellen Felgen als schwierig, so daß sich diese Bauart nicht durchgesetzt hat.

Weiterhin sind Fahrzeugluftreifen bekannt geworden, bei denen auf die Verwendung von Metall im Gürtelbereich vollständig verzichtet worden ist, ohne besondere Nachteile in Bezug auf die Belastbarkeit oder die fahrdynamischen Eigenschaften der Reifen in Kauf nehmen zu müssen. Beispielsweise ist aus der CH-Patentanmeldung 01 697/92-3 ein Fahrzeugluftreifen bekannt geworden, bei dem anstelle des Stahl- oder Textilgürtels eine Kunststoffplatte in Sandwichbauweise verwendet worden ist. Für die Gewährleistung des erforderlichen guten Sitzes dieser Reifen auf der Felge kann jedoch nach wie vor nicht auf eine Verstärkungseinlage aus Metall im Wulstbereich verzichtet werden. Diese Reifen bieten allerdings bessere Voraussetzungen für die Entsorgung.

Für verhältnismäßig geringe Belastungen, wie beispielsweise bei Fahrrädern, sind Fahrradreifen entwickelt worden, bei denen anstelle des üblichen Metalldrahtes in der Wulst eine Konstruktion aus Aramid als Festigkeitsträger eingesetzt worden ist. Das besondere Kennzeichen dieser Reifen ist in dem besonders leichten Reifenaufbau und in der Möglichkeit zu sehen, den Reifen bei Nichtgebrauch zusammenlegen zu können, so daß nur wenig Platz für dessen Aufbewahrung benötigt wird.

Derartige Reifenkonstruktionen lassen sich jedoch nicht auf hochbelastete Fahrzeugreifen übertragen, da der erforderliche sichere Sitz des Reifens auf der Felge nur dann gewährleistet werden kann, wenn diese wie bereits dargelegt, besonders ausgestaltet sind.

Der Erfindung liegt deshalb die Aufgabe zugrunde, einen einfach herzustellenden Fahrzeugluftreifen mit guten Fahreigenschaften zu schaffen, der bei Erfüllung der Festigkeitsforderungen im Wulstbereich leicht auf üblichen Felgen montiert werden kann und der insbesondere gut entsorgt werden kann.

Die der Erfindung zugrundeliegende Aufgabenstellung wird bei einem Fahrzeugluftreifen der eingangs genannten Art dadurch gelöst, daß der Wulstkern aus einer Monowicklung eines endlos gewickelten Textilfadens hoher Festigkeit gebildet ist und daß der Wulstkern wenigstens teilweise durch eine zusätzliche Umhüllung aus einem biegesteifen Material umgeben ist.

Mit diesem erfindungsgemäßen metallfreien Wulstkern ausgestattete Fahrzeugluftreifen weisen ein besonders geringes Gewicht auf, verfügen aber dennoch über die erforderlichen Eigenschaften, wie gutem Sitz auf einer normalen Felge und besserem Rundlauf. Erreicht wird dies durch die innerhalb der biegesteifen Umhüllung angeordnete Monowicklung aus einem Textilfaden. Mit dieser Konstruktion werden ähnliche Eigenschaften erreicht, wie bei Reifenkonstruktionen mit üblichen Drahtringen, wobei die Montage des Reifens auf einer Felge durch die höhere Elastizität des Wulstkernes deutlich erleichtert wird.

Damit sind derartige Fahrzeugluftreifen sehr gut bei Fahrzeugen einsetzbar, bei denen ein besonders geringes Fahrzeuggewicht angestrebt wird, um diese mit möglichst geringem Energieeinsatz bewegen zu können. Derartige Forderungen bestehen beispielsweise bei Fahrzeugen mit Elektro- oder Hybridantrieb und insbesondere bei solarbetriebenen Fahrzeugen. Ein weiterer besonderer Vorteil ist darin zu sehen, daß wesentlich verbesserte Voraussetzungen für eine spätere Entsorgung abgelaufener Reifen geschaffen werden.

Eine weitere Verbesserung des erfindungsgemäßen Fahrzeugluftreifens wird dann erreicht, wenn der Wulstkern mit der Umhüllung fest verbunden ist, was problemlos durch Anvulkanisieren erfolgen kann.

In einer zweckmäßigen Fortbildung der Erfindung besteht die Umhüllung aus einem Elastomerring mit u-förmigem Querschnitt, dessen Öffnung in Richtung zur Lauffläche radial nach außen weist. Dadurch läßt sich die Monowicklung ohne besonderen Aufwand direkt in den Elastomerring wickeln. Der Fahrzeugluftreifen kann anschließend auf übliche Weise auf einer Konfektionstrommel fertiggestellt werden.

Es ist weiterhin vorteilhaft, wenn der Elastomerring aus einem endlos gespritzten und ringförmig zusammengesetzten u-Profil aus einer Elastomermischung besteht. Dadurch kann der Elastomerring besonders kostengünstig durch Extrudieren hergestellt werden. Das ringförmige Zusammensetzen des u-Profiles kann unmittelbar auf der Konfektionstrommel erfolgen. Durch die Elastomermischung wird darüberhinaus durch deren hohe Klebrigkeit im unvulkanisierten Zustand ein guter Sitz der Monowicklung und nach außen gegenüber dem Gewebeumschlag erreicht und damit eine präzise Konfektion des Reifens gewährleistet.

Die Elastomermischung sollte vorteilhaft eine Härte um 98 Shore-A aufweisen, wodurch in Verbindung mit der Monowicklung besonders gute Laufeigenschaften des fertiggestellten Reifens erreicht werden.

Um eine weitere Verbesserung der Stabilität des Fahrzeugluftreifens zu erreichen, ist eine weitere Ausgestaltung der Erfindung dadurch gekennzeichnet, daß der Elastomerring mit beidseitig an den Schenkeln des u-Profiles angespritzten halben und über dem Wulstkern zusammenklappbaren umlaufenden Kernreitern versehen ist. Dadurch wird eine weitere Verbesserung der Eigenschaften des Reifens erreicht, insbesondere wird dessen Belastbarkeit erhöht und gleichzeitig die Konfektionierung desselben ganz wesentlich erleichtert, da der üblicherweise in der Reifenwulst vorhandene Kernreiter nunmehr lediglich durch Zusammenklappen hergestellt werden kann. Außerdem können die Hälften des Kernreiters gleichzeitig mit dem u-förmigen Ring extrudiert werden, wobei die halben Kernreiter aus einer weicheren Elastomermischung als derjenigen des Ringes, vorzugsweise aus einem Co-Extrudat bestehen.

Um im zusammengesetzten Zustand des Kernreiters eine bessere Lastverteilung zu erreichen, ist es Vorteilhaft, wenn die halben Kernreiter im jeweiligen inneren unteren Abschnitt eine partiell umlaufende Verstärkung aufweisen. In einer weiteren Fortführung der Erfindung liegt die partielle Verstärkung der aus zwei halben Kernreitern bestehenden Kernreiter im zusammengeklappten Zustand unmittelbar auf dem Wulstkern auf. Dadurch kann je nach Reifenkonstruktion eine Verbesserung des Fahreigenschaften des Reifens erreicht werden. Die partielle Verstärkung kann auch derart durch eine härtere Elastomermischung gebildet werden, daß die Elastizität in Richtung zur Lauffläche zunimmt. Das erleichtert das Zusammenklappen bzw. Hochschlagen der halben Kernreiter insbesondere dann, wenn diese sehr hoch sind.

In einer Variante der Erfindung ist wenigstens einer der halben Kernreiter im jeweiligen inneren oder äußeren unteren Abschnitt mit einer Verstärkung aus einem partiell umlaufenden gewelltem Kunststoffband versehen.

Dadurch wird eine weitere Verstärkung des Wulstkernes erreicht, wobei sich Polyamid für das Kunststoffband besonders eignet. Die Wellung des Kunststoffbandes ermöglicht einerseits das Hochschlagen der halben Kernreiter und erhöht andererseits die Stabilität des Wulstkernes, bzw. des Fahrzeugluftreifens im fertiggestellten Zustand.

Es ist hierbei ohne weiteres möglich, eine Sandwichausführung zu erzeugen, indem wenigstens einer der halben Kernreiter an einem inneren und einem äußeren unteren Abschnitt ein gewelltes Kunststoffband aufweist. Damit kann eine Vielzahl von Varianten hergestellt werden, deren Festigkeitswerte an die jeweiligen Einsatzbedingungen angepaßt werden können.

Besonders hohe Festigkeitswerte die denen eines Metallkabels entsprechen, werden dann erreicht, wenn als Textilfaden ein Aramidcordfaden verwendet wird, der vorzugsweise eine geringe Drehung aufweisen sollte.

Um den Aramidcordfaden besonders gut mit dem Elastomerring verbinden zu können, ist es vorteilhaft, wenn der Aramidcordfaden gummiert ist. Eine ähnlich gute Verbindung kann auch dadurch erreicht werden, wenn der Aramidcordfaden unter Zwischenlage einer vulkanisierbaren Elastomereinlage in dem Ring fixiert ist.

Nachfolgend soll die Erfindung an einem Ausführungsbeispiel näher erläutert werden. In der zugehörigen Zeichnung zeigen
- Fig. 1: einen Querschnitt durch ein erfindungsgemäßen Wulstkern aus einem ringförmigen u-Profil mit eingelegten Aramidcordfäden,
- Fig. 2: einen Wulstkern nach Fig. 1 mit angespritzten halben Kernreitern,
- Fig. 3: einen Wulstkern wie in Fig. 2, bei dem die Kernreiter in ihrem inneren unteren Bereich mit einer Verstärkung versehen sind,
- Fig. 4: einen Wulstkern mit aufgesetztem Kernreiter,
- Fig. 5: einen Wulstkern, bei dem die Kernreiter mit einer Verstärkung aus einem gewellten Kunststoffband versehen sind, und
- Fig. 6: einen komplettierten Reifenwulstfuß.

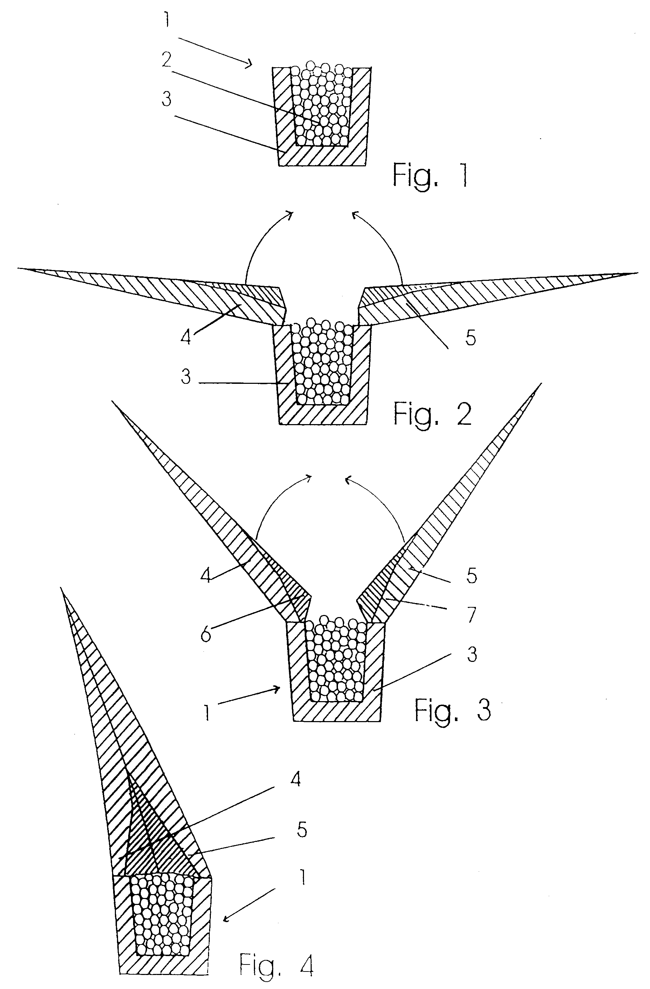

Entsprechend Fig. 1 besteht der Wulstkern 1 aus einer Monowicklung eines endlos gewickelten Textilfadens 2 hoher Festigkeit und ist durch eine zusätzliche Umhüllung 3 aus einem biegesteifen Material umgeben. Um besonders hohe Festigkeitswerte zu erreichen, die denen eines Metallkabels entsprechen, wird als Textilfaden 2 ein Aramidcordfaden verwendet, der vorzugsweise eine geringe Drehung aufweisen sollte. Die Umhüllung 3 besteht aus einem Elastomerring von hoher Härte mit u-förmigem Querschnitt, dessen Öffnung in Richtung zur Lauffläche des Reifens radial nach außen weist. Dadurch läßt sich der Textilfaden 2 in Form einer Monowicklung ohne besonderen Aufwand direkt in den Elastomerring wickeln, der im unvulkanisierten Zustand eine hohe Eigenklebrigkeit aufweist und dadurch die Monowicklung bereits vor dem Vulkanisieren fixiert.

Die Herstellung des Elastomerringes kann ohne weiteres dadurch erfolgen, daß dieser aus einem endlos gespritzten zusammengesetzten u-Profil aus einer Elastomermischung ringförmig zusammengesetzt wird. Die Elastomermischung sollte vorteilhaft eine Härte um 98 Shore-A aufweisen, wodurch in Verbindung mit der Monowicklung besonders gute Laufeigenschaften des fertiggestellten Reifens erreicht werden. Der Elastomerring kann besonders kostengünstig durch Extrudieren hergestellt werden. Das ringförmige Zusammensetzen des u-Profiles kann beispielsweise unmittelbar auf der Konfektionstrommel vorgenommen werden. Durch die Elastomermischung der Umhüllung 3 wird darüberhinaus durch deren hohe Klebrigkeit im unvulkanisierten Zustand eine präzise Konfektion des Reifens gewährleistet, da dadurch auch der später herumzuschlagende Gewebeumschlag an der Umhüllung fixiert wird.

Um den Textilfaden 2 durch Anvulkanisieren besonders gut mit der Umhüllung 3 verbinden zu können, ist es vorteilhaft, einen gummierten Textilfaden 2 zu verwenden. Eine ähnlich gute Verbindung des Textilfadens 2 mit der Umhüllung 3 kann auch dadurch erreicht werden, wenn beim Herstellen der Monowicklung eine vulkanisierbare Gummipulvermischung mit beigegeben, oder auf jede Lage der Monowicklung eine Lage aus einem unvulkanisierten Gummi- oder Elastomerband aufgebracht wird.

Die Umhüllung 3 ist weiterhin mit beidseitig an den Schenkeln des u-Profiles angespritzten halben und über dem Wulstkern 1 zusammenklappbaren umlaufenden Kernreitern 4, 5 versehen. Dadurch wird eine weitere Erleichterung und damit Verbesserung der Konfektionseigenschaften des Rohlings und damit des Reifens erreicht, insbesondere wird dessen Belastbarkeit erhöht, da der üblicherweise in der Reifenwulst vorhandene Kernreiter nunmehr lediglich durch Zusammenschlagen der halben Kernreiter 4, 5 hergestellt werden kann. Dadurch, daß die halben Kernreiter 4, 5 mit der Umhüllung 3 verbunden sind, können diese in einem Arbeitsgang mit der Umhüllung 3 extrudiert werden, wobei die halben Kernreiter 4, 5 aus einer weicheren Elastomermischung als derjenigen des Ringes gefertigt werden können. Die halben Kernreiter 4, 5 können auch aus einem Co-Extrudat bestehen.

Um im zusammengesetzten Zustand des Kernreiters eine bessere Lastverteilung zu erreichen, können die halben Kernreiter 4, 5 im jeweiligen inneren unteren Abschnitt mit einer partiell umlaufenden härteren Verstärkung 6, 7 versehen werden. (Fig. 3) Dadurch kann je nach Reifenkonstruktion eine Verbesserung des Fahreigenschaften des Reifens erreicht werden. Die partielle Verstärkung 6, 7 kann auch derart durch eine härtere Elastomermischung gebildet werden, daß die Elastizität in Richtung zur Lauffläche des Reifens zunimmt. Durch diese unterschiedliche Elastizität der halben Kernreiter 4, 5 wird das Zusammensetzen der Hälften ganz wesentlich erleichtert, was bei höheren Kernreitern 4, 5 ganz besonders wichtig ist, da diese im Ausgangszustand die Umhüllung 2, bzw. die Konfektionstrommel, flach liegend umschließen und nach dem Einwickeln des Textilfadens 3 hochzuklappen sind. (Fig. 2 bis 4)

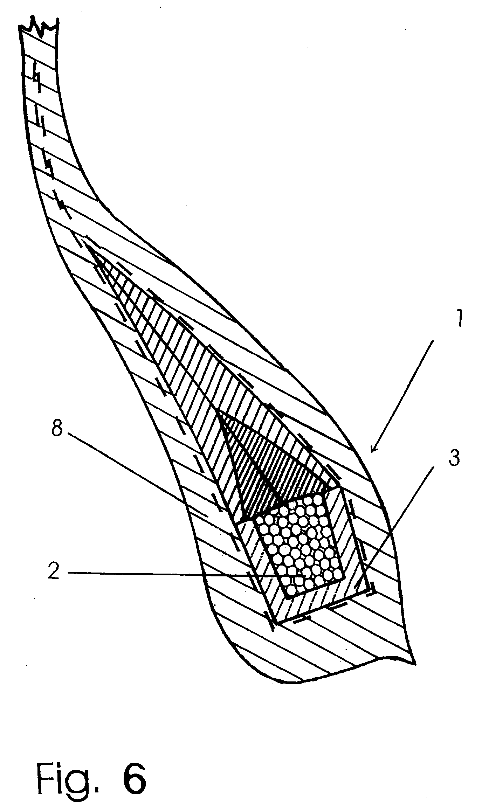

Werden nun die halben Kernreiter 4, 5 wie vorstehend zusammengeklappt, bzw. hochgeschlagen, so liegt die partielle Verstärkung 6, 7 unmittelbar auf dem Wulstkern 1 auf. (Fig. 4) Auf diese Weise entsteht beim Vulkanisieren der Reifenkonstruktion eine Reifenwulst, deren Eigenschaften mit denen von konventionellen Reifen vergleichbar sind. In Fig. 6 ist ein kompletter Reifenwulstfuß dargestellt, bei dem der Wulstkern 1 nach außen durch einen Gewebeumschlag, d.h. durch die Karkasse 8 umgeben ist.

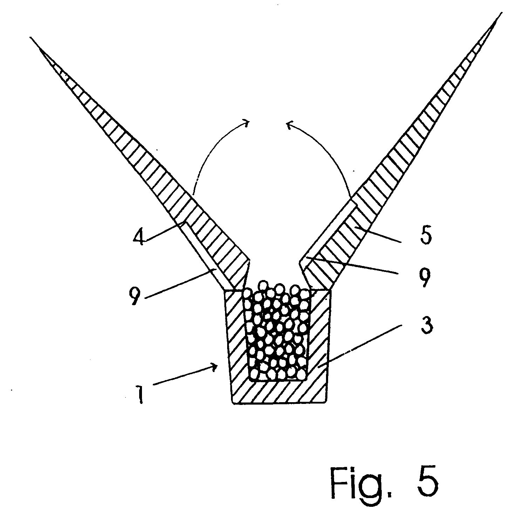

In Fig. 5 ist eine Variante der Verstärkung dargestellt, bei der jeder Kernreiter 4, 5 in seinem unteren Abschnitt mit einem in Querrichtung gewellten Kunststoffband 9, beispielsweise aus Polyamid, versehen ist, wobei dieses innen oder außen im jeweiligen Kernreiter 4, 5 angeordnet werden kann. Es ist auch möglich, jeden Kernreiter 4, 5 mit zwei Kunststoffbändern 9 zu versehen, so daß beim Hochschlagen eine sandwichartige Struktur entsteht.

Durch diese Variante wird eine weitere Verstärkung des Wulstkernes mit noch größerer Wirksamkeit erreicht. Die Wellung des Kunststoffbandes ermöglicht das Hochschlagen der Kernreiter, da das Kunststoffband 9 im hochgeschlagenen Zustand auf seiner Oberseite einen größeren Umfang aufweisen muß, als an seiner Unterseite, die sich gegenüber dem u-Profil befindet.

Solche neuartigen Fahrzeugluftreifen weisen ein besonders geringes Gewicht auf, verfügen aber dennoch über die erforderlichen Eigenschaften, wie gutem Sitz auf einer normalen Felge und besserem Rundlauf. Damit können mit dieser Konstruktion ähnliche Eigenschaften erreicht werden, wie bei Reifenkonstruktionen mit üblichen Drahtringen, wobei die Montage des Reifens auf einer Felge durch die höhere Elastizität des Wulstkernes wesentlich erleichtert wird.

Derartige Fahrzeugluftreifen können sehr gut für Fahrzeuge verwendet werden, bei denen ein besonders geringes Fahrzeuggewicht angestrebt wird, um diese mit möglichst geringem Energieeinsatz bewegen zu können. Solche Forderungen bestehen beispielsweise bei Fahrzeugen mit Elektro- oder Hybridantrieb und insbesondere bei solarbetriebenen Fahrzeugen.

Ein besonderer Vorzug dieser neuartigen Reifenkonstruktion ist auch darin zu sehen, daß damit wesentlich verbesserte Voraussetzungen für eine spätere Entsorgung abgelaufener Reifen geschaffen werden, da die Erfindung nunmehr die Herstellung vollständig metallfreier Fahrzeugluftreifen erlaubt.

### Bezugszeichenliste

- 1: Wulstkern
- 2: Textilfaden
- 3: Umhüllung
- 4, 5: halbe Kernreiter
- 6, 7: Verstärkung
- 8: Karkasse
- 9: Kunststoffband

## Patentansprüche

1. Fahrzeugluftreifen, bestehend aus einer Karkasse, die mit Beschichtungen aus verschiedenen Gummimischungen versehen ist, wobei die Karkasse im Bereich der Lauffläche eine Profilanordnung aufweist, unter der umlaufende Stahl- und/oder Textilanordnungen, bzw Kunststoffplatten in Sandwichbauweise zur Verstärkung der Lauffläche angeordnet sind, sowie einem beidseitig an die jeweilige Seitenwand anschließenden und in eine Felgenwulst einlegbaren Wulstfuß, der aus wenigstens einem Wulstkern aus einem zugfesten Material mit jeweils zugehörigem, auf jedem Wulstkern aufsitzenden, Kernreiter besteht, wobei diese durch den Karkassencord umschlossen werden, **dadurch gekennzeichnet,** daß der Wulstkern (1) aus einer Monowicklung eines endlos gewickelten Textilfadens (2) hoher Festigkeit gebildet ist und daß der Wulstkern (1) wenigstens teilweise durch eine zusätzliche Umhüllung (3) aus einem biegesteifen Material umgeben ist.

2. Fahrzeugluftreifen nach Anspruch 1, **dadurch gekennzeichnet,** daß der Wulstkern (1) mit der Umhüllung (3) fest verbunden ist.

3. Fahrzeugluftreifen nach Anspruch 1 und 2, **dadurch gekennzeichnet,** daß die Umhüllung (3) aus einem Elastomerring mit u-förmigem Querschnitt besteht, dessen Öffnung in Richtung zur Lauffläche radial nach außen weist.

4. Fahrzeugluftreifen nach Anspruch 1 bis 3, **dadurch** **gekennzeichnet,** daß der Elastomerring aus einem endlos gespritzten und ringförmig zusammengesetzten u-Profil besteht.

5. Fahrzeugluftreifen nach Anspruch 3 und 4, **dadurch gekennzeichnet,** daß der Elastomerring aus einer Elastomermischung besteht.

6. Fahrzeugluftreifen nach Anspruch 5, **dadurch gekennzeichnet,** daß die Elastomermischung eine Elastizität um 98 Shore-A aufweist.

7. Fahrzeugluftreifen nach den Ansprüchen 1 bis 6, **dadurch gekennzeichnet,** daß der Elastomerring mit beidseitig an den Schenkeln des u-Profiles angespritzten halben und über dem Wulstkern (1) zusammenklappbaren umlaufenden Kernreitern (4, 5) versehen ist.

8. Fahrzeugluftreifen nach Anspruch 7, **dadurch gekennzeichnet,** daß die halben Kernreiter (4, 5) aus einer weicheren Elastomermischung als derjenigen des Elastomerringes bestehen.

9. Fahrzeugluftreifen nach Anspruch 7 und 8, **dadurch gekennzeichnet,** daß die halben Kernreiter (4, 5) aus einem Co-Extrudat bestehen.

10. Fahrzeugluftreifen nach den Ansprüchen 7 bis 9, **dadurch gekennzeichnet,** daß die halben Kernreiter (4, 5) im jeweiligen inneren unteren Abschnitt eine partiell umlaufende härtere Verstärkung (6, 7) aufweisen.

11. Fahrzeugluftreifen nach Anspruch 10, **dadurch gekennzeichnet,** daß die partielle Verstärkung (6, 7) der aus zwei halben Kernreitern (4, 5) bestehenden Kernreiter im zusammengeklappten Zustand unmittelbar auf dem Wulstkern aufliegt.

12. Fahrzeugluftreifen nach Anspruch 11, **dadurch gekennzeichnet,** daß die partielle Verstärkung (6, 7) derart durch eine härtere Elastomermischung gebildet wird, daß die Elastizität in Richtung zur Lauffläche zunimmt.

13. Fahrzeugluftreifen nach den Ansprüchen 7 bis 9, **dadurch gekennzeichnet,** daß wenigstens einer der halben Kernreiter (4; 5) im jeweiligen inneren oder äußeren unteren Abschnitt eine Verstärkung aus einem partiell umlaufenden gewellten Kunststoffband enthält.

14. Fahrzeugreifen nach Anspruch 7 bis 9, **dadurch gekennzeichnet,** daß wenigstens einer der halben Kernreiter (4; 5) an einem inneren und einem äußeren unteren Abschnitt ein gewelltes Kunststoffband aufweist.

15. Fahrzeugluftreifen nach Anspruch 1, **dadurch gekennzeichnet,** daß als Textilfaden (1) ein Aramidcordfaden verwendet wird.

16. Fahrzeugluftreifen nach Anspruch 13, **dadurch gekennzeichnet,** daß der Aramidcordfaden eine geringe Drehung aufweist.

17. Fahrzeugluftreifen nach einem der Ansprüche 1 bis 14, **dadurch gekennzeichnet,** daß der Aramidcordfaden gummiert ist.

18. Fahrzeugluftreifen nach einem der Ansprüche 1 bis 14, **dadurch gekennzeichnet,** daß der Aramidcordfaden unter Zwischenlage einer vulkanisierbaren Elastomereinlage in dem Ring fixiert ist.
